# EUROPEAN PATENT APPLICATION

(11) **EP 1 547 712 A1**
(43) Date of publication of application: **29.06.2005**
(21) Application number: 04030134.3
(22) Date of filing: 20.12.2004
(51) Int. Cl.: B23D 53/12, B23D 55/00, B25H 3/00

(54) **Band saw hook**

(30) Priority: 22.12.2003 US 745113
(71) Applicant: BLACK & DECKER INC., Newark, Delaware 19711 (US)
(72) Inventor: Achterberg, Nicholas E., New Freedom Pennsylvania 17349 (US); Welsh, Robert P., Hunt Valley Maryland 21030 (US); Mannarino, Frank A., Baltimore Maryland 21212 (US)
(74) Representative: Bell, Ian Stephen

(57) **Abstract**

A band saw (10) has a housing (12) with portions (14,16) covering the output wheels and the motor. A handle (20) is coupled with the housing (12). Also, an activation member (22) is coupled with the housing (12) and is electrically coupled with the motor and the power source. A blade (26) is coupled with the output members to accomplish cutting. A hanger member (30) is coupled with the housing (12). The hanger member (30) includes an engaging surface to support the band saw (10) with respect to a support member (30) to suspend the band saw off the ground to enable the user to hang the band saw between use out of the work area.

## Description

The present invention relates to saws, and more particularly, to band saws that include a device which enables the band saw to be positioned off the ground.

Band saws are utilized to cut various types of material. Generally, the material is held in a vice or the like apparatus. The band saws include a housing which is generally formed from an aluminum material. The aluminum provides the band saw with a lightweight construction; however, the aluminum is susceptible to cracking or breaking if the band saw has a sudden impact with the ground. Band saws generally include a handle at its front end to help in holding of the band saw during cutting. Band saws, after they are used by workmen, are generally placed onto the ground. However, on some occasions, the user may utilize the front handle of the band saw to balance it on the vice-like apparatus. Additionally, workmen may place the tool on a bench, for just a moment while material is moved around. However, the tool is positioned where it may be knocked to the floor by the workmen due to the nature of the work that occurs with portable band saws, such as cutting long pipes and then moving the saw to a needed location. Continually placing the tool on the ground is tiring and therefore workmen would rather place it on a bench or vice. Since the handle is not designed to hold the band saw onto the vice, a sudden vibration of the vice can cause the band saw to fall from the vice crashing onto the ground. The crash may cause cracking, breaking, or chipping of the housing. Thus, it would be desirable to have a device which secures the band saw to the vice, in turn, positioning the band saw above the ground.

Accordingly, the present invention provides the art with a device that securely positions a band saw above the ground. The invention enables the band saw to be attached to a support apparatus, such as a vice. The invention provides a hook mechanism integral with the housing to enable the band saw to be securely hung from a support or the like. The placement of the hook enables easy access to the main handle when it is picked back up again by the workmen.

According to a first aspect of the invention, a band saw comprises a housing having a pair of wheel covering portions separated by a motor covering portion. A motor is positioned within the motor housing portion. A handle is coupled with the housing. An activation member is electrically coupled with the motor and a power source. The activation member is positioned on the housing. An output member is coupled with the motor. The output member is coupled with a blade to drive the blade. A hanging member, such as a pair of wheels, is coupled with the housing. The hanging member has an engaging surface to support the band saw with respect to a support member to suspend the band saw off the ground which enables the user to hang the band saw between uses. The hanger member has an arcuate portion and a mounting portion. The mounting portion includes a surface that follows a contour of a surface on the housing to enable the mounting portion to be secured to the housing. The mounting portion includes a mechanism to secure the hanger portion with the housing.

From the following detailed description taken in conjunction with the accompanying drawings and claims, other objects and advantages of the present invention will become apparent to those skilled in the art.

The present invention will become more fully understood from the detailed description and the accompanying drawings, wherein:
Figure 1 is a perspective view of a band saw in accordance with the present invention;
Figure 2 is a perspective view of the hanger device on the band saw.
Figure 3 is a perspective view of the hanging device.
Figure 4 is a perspective view of the band saw in Figure 1 mounted on a support surface such as a vice.

The following description of the preferred embodiment(s) is merely exemplary in nature and is in no way intended to limit the invention, its application, or uses.

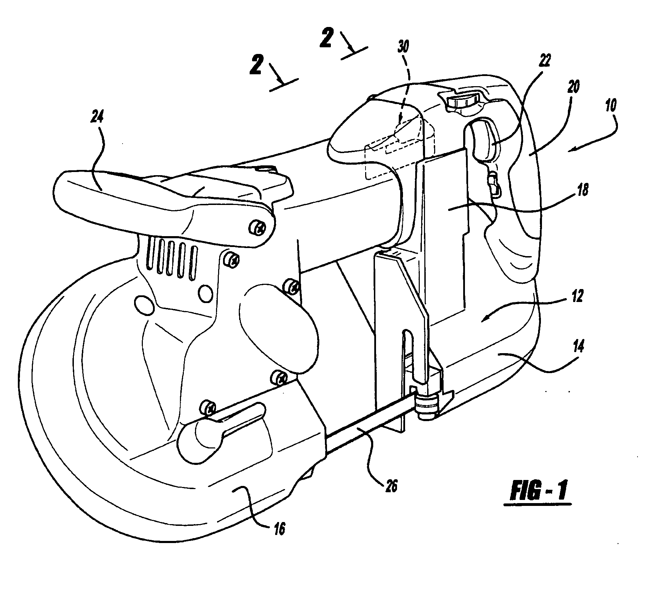

Turning to the figures, particularly Figure 1, a band saw is illustrated and designated with the reference numeral 10. The band saw 10 includes a housing 12 including wheel covering housing portions 14 and 16 separated by a motor housing portion 18. A handle 20 is coupled with the housing and includes an actuating member 22 which is electrically coupled with the motor and power source (not shown). Also, an additional handle 24 is positioned in front of the handle 20. A blade 26 is coupled with output wheels which rotate the blade in the housing. A hanger mechanism 30 is coupled with the housing 12.

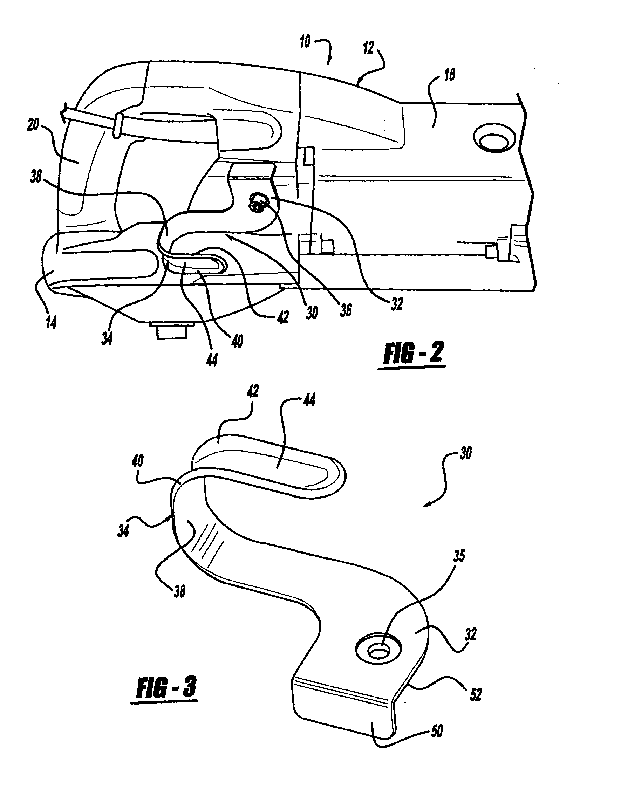

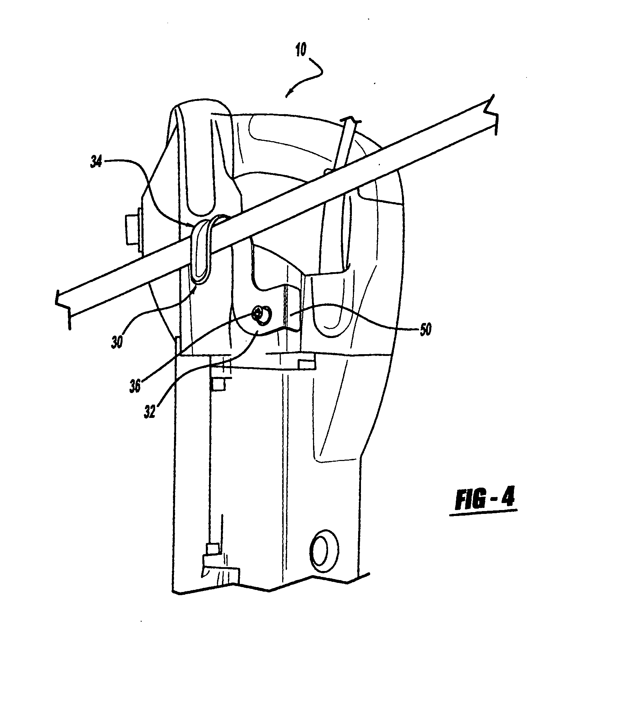

Turning to Figures 2 through 4, a better understanding of the hanging mechanism 30 will be had. The hanging mechanism 30, as seen in Figure 4, mounts the band saw 10 above the ground to enable easy access to the band saw between use. Also, the hanger mechanism secures the band saw 10 to a vice or the like so that it is positioned out of the way from the work area.

The hanger mechanism 30 includes a mounting portion 32 and an arcuate portion 34. The mounting portion 32 includes an aperture 35 which enables a fastener 36 to pass therethrough to secure the hanger mechanism 30 onto the band saw 10. The arcuate portion 34 has an inner surface 38 which engages a mounting surface. Also, the arcuate portion 34 may have raised sides 40 and 42 forming a trough 44 between them to reinforce the arcuate portion of the hanger member 30.

The mounting member 32 may include a downward turn flange 50. The flange is used to position the hanging mechanism on the housing so that the hanging mechanism is non-rotatable on the housing 12. The flange 50 positions the hanger member 30 in place. Also, the mounting portion 32 includes a surface 52 configured to follow the contour of the housing. Thus, the hanger member 30 is readily secured to the housing and conforms to the housing surface.

While the above detailed description provides a preferred embodiment of the present invention, those skilled in the art will understand that alterations, variations and modifications may exist without deviating from the scope of the present invention.

## Claims

1. A band saw comprising:
a housing having a pair of wheel covering portions separated by a motor covering portion;
a motor in said housing motor covering portion;
a handle coupled with said housing;
an activation member coupled with said motor and a power source, said activation member on said housing;
an output member coupled with said motor, said output member coupled with a blade; and
a hook member coupled with said housing, said hook member having an engaging surface for supporting said band saw with respect to a support member for suspending said band saw off the ground enabling a user to hang said band saw between use in a convenient way for repeated use.

2. The band saw according to Claim 1 wherein said hook member has an arcuate portion and a mounting portion.

3. The band saw according to Claim 2 wherein said base portion has a surface for following a contour on a surface of said housing.

4. The band saw according to Claim 2 wherein said mounting portion including mechanism for securing said hook member with said housing.

5. The band saw according to Claim 1, wherein said hook member includes a flange for positioning said hook member for non-rotatable movement on said housing.
